# EUROPEAN PATENT SPECIFICATION

(11) **EP 2 532 847 B1**
(45) Date of publication and mention of the grant of the patent: **08.08.2018**
(21) Application number: 10845271.5
(22) Date of filing: 20.12.2010
(51) Int. Cl.: F01M 1/06, F01M 1/08, F01M 1/16, F01M 9/10, F02F 1/24, F16C 3/14, F16C 9/02, F16C 9/04, F16C 19/26, F16C 19/46, F16C 33/46, F16C 33/66, F16H 53/02, F16N 7/38, F16C 33/78, F16C 7/02, F01M 11/02

(54) **ENGINE LUBRICATION DEVICE**
MOTORSCHMIERVORRICHTUNG
DISPOSITIF DE LUBRIFICATION DE MOTEUR

(30) Priority: 05.02.2010 JP 2010024059
(43) Date of publication of application: 12.12.2012
(73) Proprietor: NTN Corporation, Osaka-shi, Osaka 550-0003 (JP)
(72) Inventor: KATAYAMA, Akihiko, Iwata-shi Shizuoka 438-0037 (JP); TERADA, Takanori, Iwata-shi Shizuoka 438-0037 (JP); YAMADA, Haruki, Iwata-shi Shizuoka 438-0037 (JP)
(74) Representative: Grünecker Patent- und Rechtsanwälte PartG mbB
(86) International application number: PCT/JP2010/072855
(87) International publication number: WO 2011/096140

(56) References cited:
- EP-A1- 0 636 772
- EP-A2- 0 713 962
- JP-A- 8 144 842
- JP-A- 8 296 420
- JP-A- 2006 038 172
- JP-A- 2008 057 743
- JP-A- 2008 223 915
- JP-U- 63 119 821
- JP-U- H01 145 910

## Description

### Technical Field

The present invention relates to engine lubrication devices for automobiles, etc., and more specifically to reducing the amount of lubricant.

### Background Art

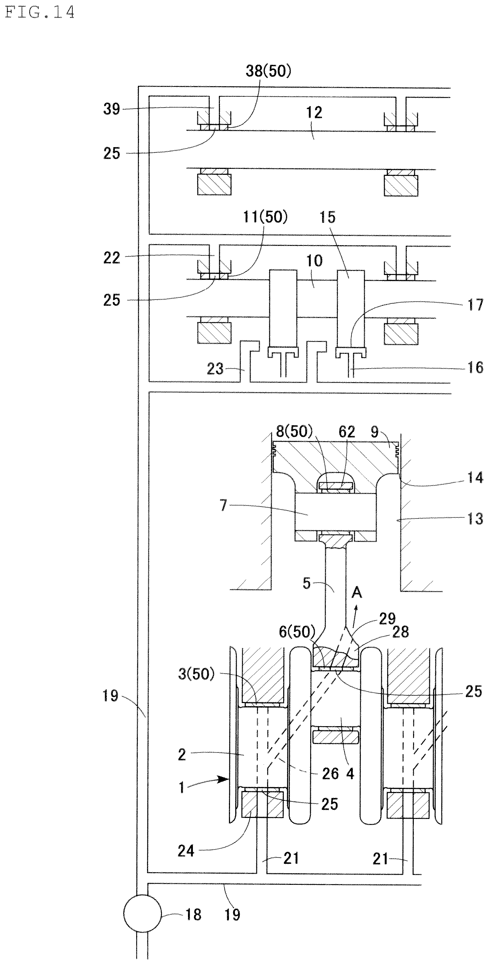

Lubricant feeding systems in lubrication devices for conventional four-cycle engines having two or more cylinders will be described based on Fig. 14. Bearings which are targets of lubrication are journal bearings 3 fitted into journals 2 of a crankshaft 1; conrod large-end bearings 6 fitted into crank pins 4 between each crank pin 4 and a conrod 5; and conrod small-end bearings 8 fitted into piston pins 7 of pistons 9. A cam shaft 10 has cam shaft bearings 11 as a target; and a balance shaft 12 has balance shaft bearings 38 as a target (Patent Literatures 1, 2, 3 and 5).

On the other hand, sliding portions which are targets of lubricant supply are piston sliding portions 14 between each piston 9 and a cylinder inner wall 13; and cam sliding portions 17 between cams 15 on the cam shaft 10 and tappets 16.

As shown in the figure, a lubricant feeding system includes a main pressure oil duct 19 which is connected to an oil pump 18 incorporated in the engine. To this duct, bearing oil-supply paths 21 are provided for the crankshaft 1 per each cylinder. Likewise, bearing oil-supply paths 22 and sliding portion oil-supply paths 23 are provided for the cam shaft 10 per cylinder. For a balance shaft 12, bearing oil-supply paths 39 are provided.

The bearing oil-supply path 21 passes through a shaft supporting portion 24, a lubrication hole 25 in the journal bearing 3, then radically through the journal 2 and reaches an inner circumferential surface on the opposite side of this journal bearing 3, thereby supplying lubricant to the journal bearing 3. The bearing oil-supply path 21 branches inside the journal 2, and this branch or divergent path 26 reaches and supplies lubricant to an inner diameter surface of the conrod large-end bearing 6. The conrod large-end bearing 6 has a lubrication hole 25. The bearing oil-supply path 21, the divergent path 26 and the lubrication hole 25 have a diameter of 5 through 6 millimeters approx. The lubrication hole 25 is not designed to limit the amount of lubricant supply.

After entering the lubrication hole 25 in the conrod large-end bearing 6 and passing through the conrod large-end portion 28, the oil path is open to the outside. From this opening 29, lubricant is centrifugally splashed as indicated by Arrow A due to rotation, thereby lubricating the piston sliding portion 14 and the conrod small-end bearing 8 (Patent Literature 2).

Also, in the cam shaft 10, lubricant is supplied to the cam shaft bearing 11 from the bearing oil-supply path 22 via the lubrication hole 25. Lubricant is also supplied to the cam sliding portion 17 between the cam 15 and the tappet 16 from the sliding portion oil-supply path 23. On the balance shaft 12, lubricant is supplied to the balance shaft bearing 38 from the bearing oil-supply path 39 via the lubrication hole 25. The bearing oil-supply paths 22, 39, and the lubrication hole 25 have a diameter of 5 through 6 millimeters approx. The lubrication hole 25 is not designed to limit the amount of lubricant supply.

Conventionally, the journal bearing 3, the conrod large-end bearing 6, the conrod small-end bearing 8, the cam shaft bearing 11 and the balance shaft bearing 38 are all provided by bushings or slide bearings 50 made of metal (Patent Literature 1). In Fig. 14, this is indicated by the reference number 50 in a pair of parentheses accompanied to each of those bearings 3, 6, 8, 11 and 38.

In contrast to these bearings, needle bearings have superior characteristics: They have high load bearing capability and high stiffness for their small projected area; they are low-friction bearings as compared to the slide bearings; and they can operate with a smaller amount of lubricant. Because of these advantages, there have been proposals for use of these needle bearings as crankshaft journal bearings (Patent Literature 4).

### Citation List

### Patent Literature

Patent Literature 1: JP-A H7-27126 Gazette
Patent Literature 2: JP-A 2000-161334 Gazette
Patent Literature 3: JP-A 2000-213323 Gazette
Patent Literature 4: U.S.A. Patent No. 1921488, Description and Drawings
Patent Literature 5: EP 0 636 772 A1

### Summary of Invention

### Technical Problem

The above-mentioned advantages of needle bearings would lead to an idea that all or some of the journal bearings 3 of the crankshaft 1, the conrod large-end bearing 6, the conrod small-end bearing 8, the cam shaft bearings 11 and the balance shaft bearings 38 in the engine lubrication device may be provided by needle bearings.

A problem in needle bearings, however, is that lubricant may leak easily from a gap between mutually adjacent rollers to the outside of the bearings. This leads to a risk in the bearing oil-supply path 21 for the crankshaft 1 that if the journal bearing 3 and the conrod large-end bearing 6 which are located on a relatively upstream side are provided by needle bearings and if the amount of lubricant is reduced to an appropriate amount which will allow acceptable level of bearing operation, then there will be a shortage of lubricant for the piston sliding portion 14 and the conrod small-end bearing 8 which are located on the most downstream side.

In this case, the reduced amount of lubricant will not cause any problem in the conrod small-end bearing 8 which is provided by a needle bearing as far as a minimum required amount of lubrication is provided, since needle bearings is operable with a small amount of lubricant as has been mentioned earlier. On the contrary, the piston sliding portion 14 has a risk of shortage of lubricant and poor lubrication if the amount of lubricant supply is just about to support normal operation of needle bearings.

Therefore, it is an object of the present invention to provide an engine lubrication device which includes needle bearings in place of the conventional slide bearings, thereby uses a reduced amount of lubricant, and yet has no risk for shortage of lubricant in the piston sliding portion.

### Solution to Problem

In order to solve the above-described problems, the present invention provides an engine lubrication device for a four-cycle engine which has two or more cylinders. The lubrication device includes oil-supply paths connected to a main pressure oil duct for lubrication to a journal bearing, a conrod large-end bearing, a conrod small-end bearing and to a piston sliding portion per cylinder. With this arrangement, the oil-supply paths includes a bearing oil-supply path and a sliding portion oil-supply path connected in parallel to the main pressure oil duct; the bearing oil-supply path provides a lubricant supply route to a journal shaft disposed on an upstream side and a conrod large-end bearing disposed on a downstream side; the sliding portion oil-supply path provides a lubricant supply route to the conrod small-end bearing and the piston sliding portion; at least the conrod large-end bearing is provided by a needle bearing; and the bearing oil-supply path includes an oil-feed limiting means for limiting an amount of lubricant supply to the needle bearing serving as the conrod large-end bearing, to an operable level.

According to the above arrangement, the sliding portion oil-supply path is independent of the bearing oil-supply path. Therefore, limiting the amount of lubricant supply to the bearing oil-supply path by the oil-feed limiting means does not affect the amount of lubricant supply to the sliding portion oil-supply path.

### Advantageous Effects of Invention

According to the present invention, the bearing oil-supply path may be supplied with a relatively small amount of lubricant necessary for the needle bearing by way of the oil-feed limiting means. This results in overall reduction in the amount of lubricant, making it possible to reduce the size of the oil pump. On the other hand, piston sliding portion can be supplied with a necessary amount of lubricant through the sliding portion oil-supply path, so this arrangement eliminates the risk of poor lubrication.

### Brief Description of the Drawings

Fig. 1 is an oil-supply path diagram according to Embodiment 1.
Fig. 2 is a fragmentary unillustrated enlarged sectional view showing an example of a journal bearing according to the Embodiment.
Fig. 3 is a fragmentary unillustrated enlarged sectional view showing another example of the journal bearing according to the Embodiment.
Fig. 4 is a fragmentary unillustrated enlarged sectional view showing another example of the journal bearing according to the Embodiment.
Fig. 5 is a fragmentary unillustrated enlarged sectional view showing another example of the journal bearing according to the Embodiment.
Fig. 6 is a fragmentary unillustrated enlarged sectional view of a conrod large-end bearing according to the Embodiment.
Fig. 7 is a fragmentary unillustrated enlarged sectional view of a conrod small-end bearing according to the Embodiment.
Fig. 8 is a fragmentary unillustrated enlarged sectional view of a camshaft bearing according to the Embodiment.
Fig. 9A is an illustrative drawing, shown with values obtained in an experiment conducted to a conventional device.
Fig. 9B is an illustrative drawing, shown with values obtained in an experiment conducted to Embodiment 1.
Fig. 10 is an oil-supply path diagram according to Embodiment 2.
Fig. 11 is an oil-supply path diagram according to Embodiment 3.
Fig. 12 is an oil-supply path diagram according to Embodiment 4.
Fig. 13 is an oil-supply path diagram according to Embodiment 5.
Fig. 14 is an oil-supply path diagram of a conventional device.

### Description of Embodiments

Hereinafter, embodiments of the present invention will be described based on the attached drawings.

### [Embodiment 1]

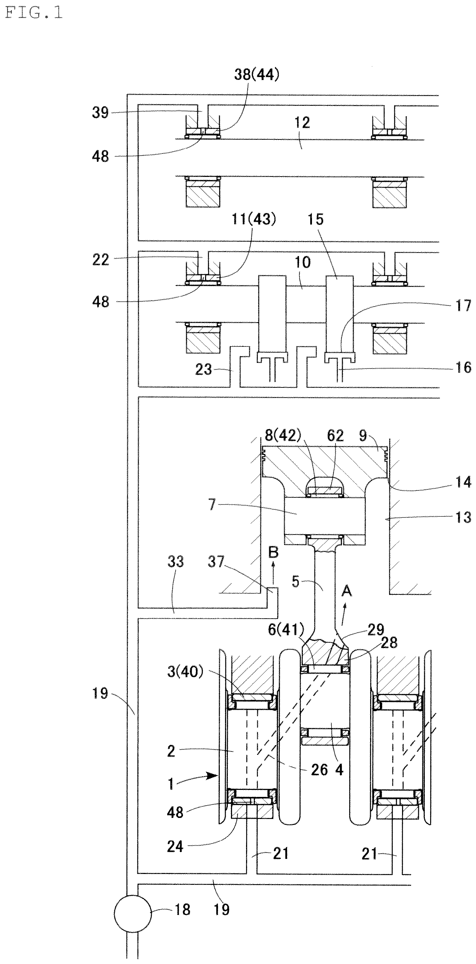

Fig. 1 through Fig. 9 show an engine lubrication device according to Embodiment 1, which has essentially the same basic configuration as the one shown in Fig. 14 described earlier in "Background Art". Therefore, all identical components and parts will be indicated by the same reference codes.

Again, in Embodiment 1, the lubrication device is for conventional four-cycle engines having two or more cylinders, and thus, bearings which are targets of lubrication are journal bearings 3 provided in journals 2 of a crankshaft 1 per cylinder; conrod large-end bearings 6 fitted into crank pins 4; and conrod small-end bearings 8 fitted into piston pins 7. Also, cam shaft bearings 11 and balance shaft bearings 38 are target of lubrication for the cam shaft 10 and the balance shaft 12 respectively.

Like in conventional devices, sliding portions which are targets of lubricant supply are a piston sliding portions 14 between each piston 9 and a cylinder inner wall 13; and cam sliding portions 17 between cams 15 on a cam shaft 10 and tappets 16.

In this Embodiment 1, the above-mentioned journal bearings 3, the conrod large-end bearings 6, the conrod small-end bearings 8, the cam shaft bearings 11 and the balance shaft bearings 38 are all provided by needle bearings 40, 41, 42, 43, 44, respectively, so these bearings 3, 6, 8, 11, 38 will also be accompanied by respective reference numbers in parentheses of the corresponding needle bearings 40 through 44 in the drawings and description hereinafter.

As shown in Fig. 1, a lubricant feeding system includes a main pressure oil duct 19 which is connected to an oil pump 18 incorporated in the engine, but differs from the conventional systems in that the mail pressure oil duct 19 is provided with a bearing oil-supply path 21 for the crankshaft 1, per each cylinder; and in parallel to the mail pressure oil duct 19 is also provided with a sliding portion oil-supply path 33 per cylinder, independently of the bearing oil-supply path 21. Configuration for the cam shaft 10 is conventional, i.e., a bearing oil-supply path 22 and a sliding portion oil-supply path 23 are provided in parallel to the main pressure oil duct 19. Likewise, a bearing oil-supply path 39 is provided in the balance shaft 12.

The above-described bearing oil-supply path 21 passes through a shaft supporting portion 24, a lubrication hole 48 in the bearing 3 (40), then radially through the journal 2 and reaches an inner circumferential surface on the opposite side of this journal bearing 3, thereby supplying lubricant to the journal bearing 3 (40). The bearing oil-supply path 21 branches inside the journal 2, and this branch, or divergent path 26 reaches and supplies lubricant to an inner diameter surface of the conrod large-end bearing 6 (41).

In the cam shaft 10, oil supply is conventional, i.e., lubricant is sent from the bearing oil-supply path 22 to the cam shaft bearing 11(43), and from the sliding portion oil-supply path 23 which is provided for each cylinder to a cam sliding portion 17 between the cam 15 and the tappet 16. In the balance shaft 12, lubricant is supplied from the bearing oil-supply path 39 to the balance shaft bearing 38 (44).

The bearing oil-supply path 21 has an inner diameter of 5 through 6 millimeters like in conventional devices. On the other hand, the lubrication hole 48 is smaller than the inner diameter of the bearing oil-supply path 21, to the extent possible for limiting the supply of lubricant to an amount capable of keeping the journal bearing 3 (40) and the conrod large-end bearing 6 (41) to be operable, i.e., 0.5 through 3 millimeters (to have a sectional area of 0.2 square millimeters through 7 square millimeters). The lubrication hole 48 which has this reduced inner diameter represents the "oil-feed limiting means" which is referred to in the Claims.

Although the conrod large-end bearing 6 (41) does not include oil-feed limiting means, the amount of lubricant supplied to the conrod large-end bearing 6 (41) is limited by the lubrication hole 48 of the journal bearing 3 (40) on the upstream side.

After passing the conrod large-end bearing 6 (41) and then through the conrod large-end portion 28, the oil path is open to the outside. From this opening 29, lubricant is centrifugally splashed as indicated by Arrow A due to rotation, thereby lubricating the piston sliding portion 14 and the conrod small-end bearing 8 (42). However, since the amount of lubricant is limited at the lubrication hole 48 as described above, there is a significant amount of shortage for providing lubrication to the piston sliding portion 14 and the conrod small-end bearing 8.

In order to compensate for the shortage, the present invention provides an arrangement as shown in Fig. 1, where the main pressure oil duct 19 has a sliding portion oil-supply path 33 for each cylinder, so that an amount of lubricant necessary for the sliding portion 14 and the conrod small-end bearing 8 (42) is supplied from a lubrication nozzle 37 provided at each end of the oil supply path (see Arrow B). Since the sliding portion oil-supply path 33 is independent from the bearing oil-supply path 21, the amount of lubricant supplied from the lubrication nozzle 37 is not affected by the limitation made to the amount of lubricant supplied from the bearing oil-supply path 21.

With an addition of the sliding portion oil-supply path 33, the sliding portion 14 and the conrod small-end bearing 8 (42) are now supplied with lubricant, as indicated by Arrows A and B, from two routs, i.e., from the oil-supply paths 21, 33. Since the amount of lubricant supplied from the route indicated by Arrow A is significantly small, practically all amount of lubricant necessary for the lubrication is supplied from the route indicated by Arrow B, i.e., from the sliding portion oil-supply path 33.

It should be noted here that the lubrication hole 48 in the cam shaft bearing 11 (43) and the lubrication hole 48 in the balance shaft bearing 38 (44) also have an inner diameter of 0.5 through 3 millimeters.

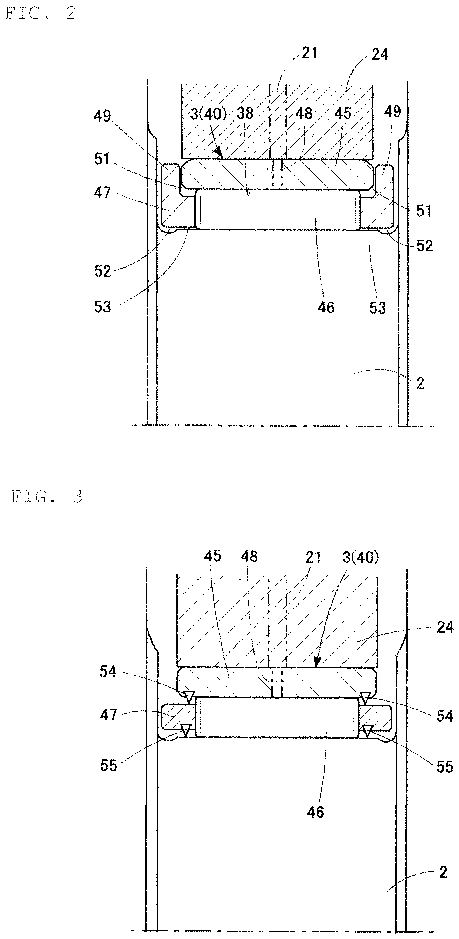

Next, based on Fig. 2 through Fig. 8, description will cover specific configurations of the needle bearings 40 through 44 which are used as the journal bearing 3, the conrod large-end bearing 6, the conrod small-end bearing 8, the cam shaft bearing 11 and the balance shaft bearing 38. The description also applies to needle bearings which are utilized in other Embodiments.

Fig. 2 through Fig. 5 show several examples of the needle bearing 40 which is used as the journal bearing 3. The needle bearing 40 in Fig. 2 includes an outer ring 45; needle-like rollers 46; and a retainer 47 which guides the needle-like rollers 46. Each of the outer ring 45 and the retainer 47 is an annular assembly composed of a pair of semi-annular halves each representing a radially divided half; in other words, the needle bearing is a two-piece needle bearing. The above-described lubrication hole 48 is made in the outer ring 45 as a radial through-hole. The lubrication hole 48 has the above-mentioned diameter (0.5 through 3 millimeters).

The retainer 47 has two end portions on two sides, where along the entire outer circumferences of their outer diameter surfaces, a pair of axially opposed flange portions 49, 49 extend in the outer diameter direction in a shape of a letter L. The flange portions 49 have their opposing inner surfaces extended to face closely to end surfaces of the outer ring 45.

The flange portions 49 are opposed to end surfaces of the outer ring 45, with gaps, i.e., outer-ring-side narrowed pathways 51, 51 on both sides which are significantly narrower than in conventional needle bearings. The size of the outer-ring-side narrowed pathway 51 is 0.2 millimeters. By setting the size of the outer-ring-side narrowed pathway 51 as described above, the present invention makes it possible to reduce the amount of lubricant leakage out of the gaps between the outer ring 45 and the retainer 47 while reducing rotation torque increase in the needle bearing 40.

Also, the two end portions on the two sides of the retainer 47 are formed to have a smaller inner diameter than in conventional needle bearings, to provide small-inner-diameter surfaces 52 closely to the journal 2. The small-inner-diameter surfaces 52 and the journal 2 form journal-side narrow pathways 53, 53.

The above-described needle bearing 40 is used as a journal bearing 3 which is located at an upstream side of the bearing oil-supply path 21, and the outer-ring-side narrowed pathway 51 and the journal-side narrow pathway 53 reduces the flow of lubricant leakage.

The needle bearing 40 shown in Fig. 3 includes sealing members 54 provided between the outer ring 45 and the retainer 47; and sealing members 55 provided between the retainer 47 and the journal 2, as means for reducing lubricant leakage.

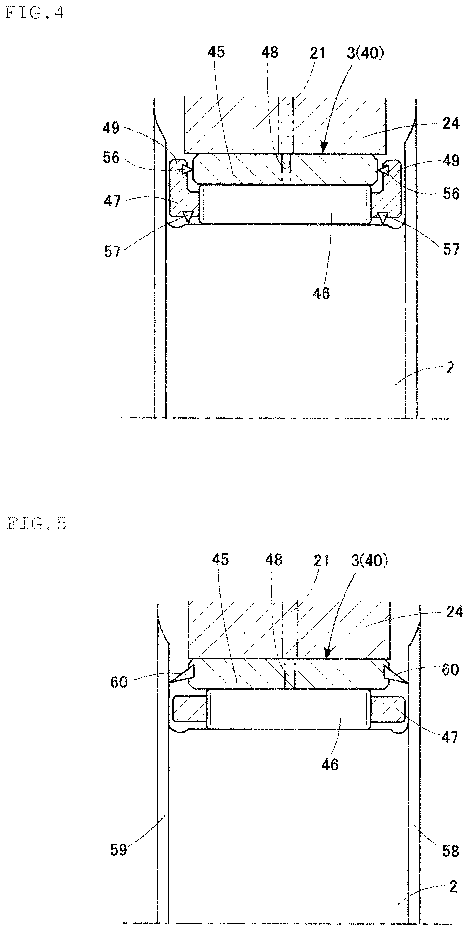

The needle bearing 40 shown in Fig. 4 includes, like the embodiment described with reference to Fig. 2, L-shaped flange portions 49 on two end portions on two sides of the retainer 47, and in addition, sealing members 56 between the flange portion 49 and the outer ring 45, and sealing members 57 between the retainer 47 and the journal 2.

The needle bearing 40 shown in Fig. 5 includes sealing members 60 between the outer ring 45 and a crank arm boss portion 58, as well as between the outer ring 45 and a counterweight boss portion 59.

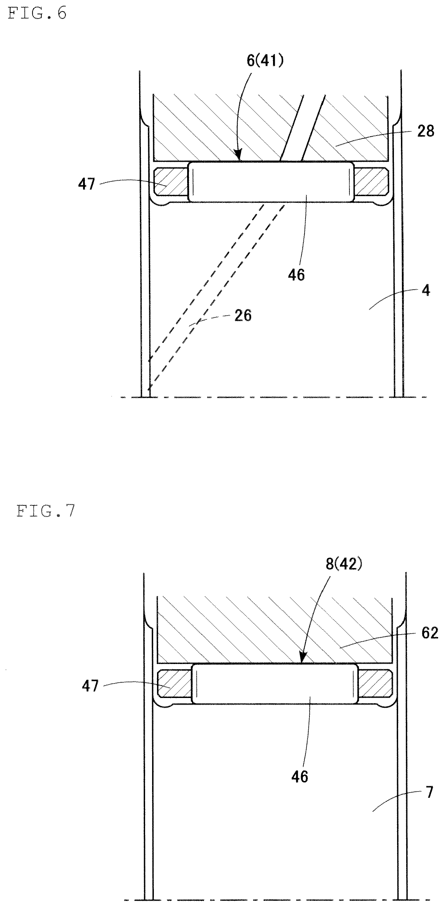

Next, the needle bearing 41 which is used as the conrod large-end bearing 6 includes, as shown in Fig. 6, needle-like rollers 46 and a retainer 47 which guides the needle-like rollers 46. This bearing does not have an outer ring, and is placed between the conrod large-end portion 28 and the crank pin 4. Lubricant is supplied directly from the divergent path 26.

The needle bearing 42 which is used as the conrod small-end bearing 8 includes, as shown in Fig. 7, needle-like rollers 46 and a retainer 47. This bearing does not have an outer ring, and is placed between the conrod small-end portion 62 and the piston pin 7. This bearing does not have a lubrication hole, and lubrication is performed from a gap between the retainer 47 and the piston pin 7 for example.

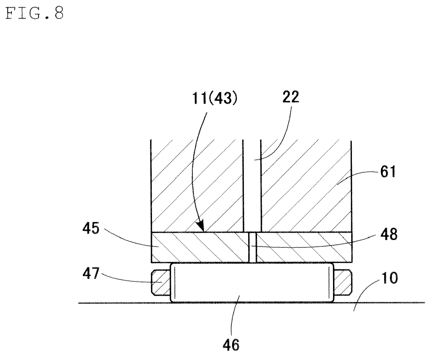

The needle bearing 43 which is used as the cam shaft bearing 11 is an ordinary bearing which includes, as shown in Fig. 8, an outer ring 45, needle-like rollers 46 and a retainer 47 which guides the needle-like rollers 46, and is placed between the shaft supporting portion 61 and the cam shaft 10. The outer ring 45 has a lubrication hole 48, which represents the "oil feed-amount limiting means" with a smaller diameter than in conventional bearings for supplying a necessary amount of lubricant for operation of the needle bearing 43. The needle bearing 44 which is used as the balance shaft bearing 38 has the same configuration as this.

Table 1 shows a relationship between the amount of lubricant supply and operability of slide bearings and needle bearings.

**[Table 1]**

| | The Amount of Lubricant Supply (ml/min) | Operability |
|---|---|---|
| Sliding Bearing | 1000 | Operable |
| | 250 | Poor lubrication |
| Needle Bearing | 250 | Operable |
| | 100 | Operable |
| | 10 | Operable |

Table 2 shows a result of a life test of a needle bearing as an individual part.

**[Table 2]**

| The Amount of Lubricant Supply (ml/min) | Life Test Result (h) | Life ratio |
|---|---|---|
| 100 | 555 | 1 |
| 10 | 577 | 1.04 |

From Table 1 and Table 2, it is understood that needle bearings are operable with a smaller amount of lubricant, ranging from 1/10 to 1/100 of the amount necessary for slide bearings, and their life with such a small amount of lubrication as 10 ml/min can be as long as with 100 ml/min lubrication.

### Experimental Example

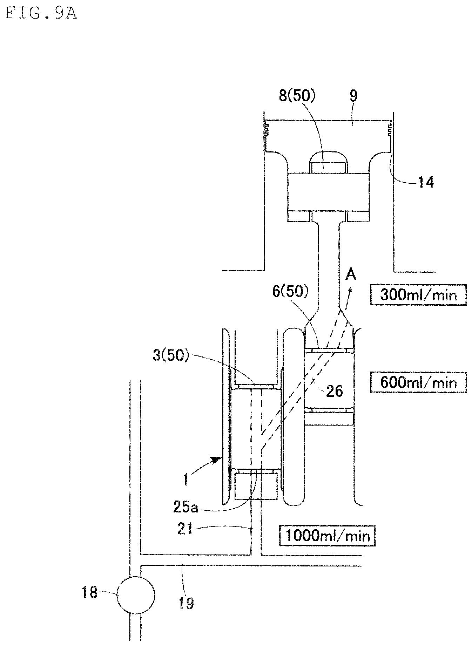

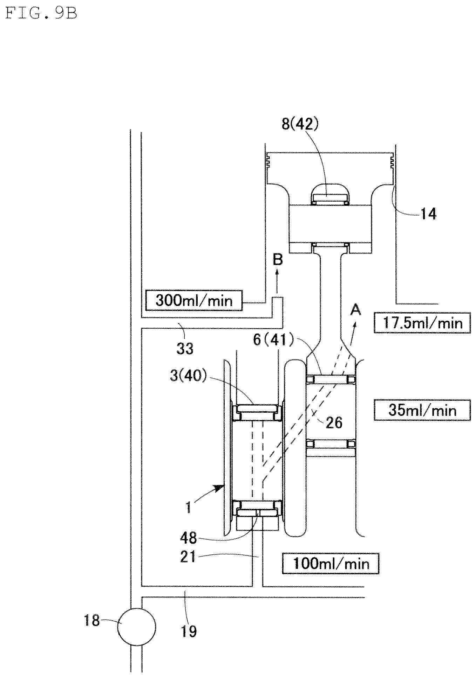

Next, Table 3 shows a result of comparative experiment between a conventional case where the journal bearing 3, the conrod large-end bearing 6 and the conrod small-end bearing 8, i.e. , bearings relevant to the crankshaft 1 were all provided by slide bearings 50 (see Fig. 14) and the Embodiment 1 where they were all provided by needle bearings 40, 41, 42 (see Fig. 1). For these two cases, measurements were made for the amount of lubricant at the journal bearing 3, the conrod large-end bearing 6, the piston sliding portion 14 and the conrod small-end bearing 8. Individual measurements are also shown with values in Fig. 9A (conventional bearing) and Fig. 9B (Embodiment 1).

**[Table 3]**

| | Journal Bearing 3 | conrod large-end bearing 6 | piston sliding portion 14 & conrod small-end bearings 8 |
|---|---|---|---|
| Slide Bearing (Fig. 9A) | 1000 | 600 | 300 |
| Roller Bearing (Fig. 9B) | 100 | 35 | 17.5 |

As shown in Fig. 9A, in the conventional bearing, lubrication at a rate of 1000ml/min from the main pressure oil duct 19 through the bearing oil-supply path 21 to the journal bearing 3 (50) provides lubrication at a rate of 600ml/min which can keep the conrod large-end bearing 6 (50) operable. On the downstream side, the piston sliding portion 14 and the conrod small-end bearing 8 (50) are lubricated at a rate of 300ml/min, without the risk of poor lubrication to the piston sliding portion 14.

On the other hand, in Embodiment 1 shown in Fig. 9B, the piston sliding portion 14 and the conrod small-end bearing 8 (42) receive direct supply of lubricant via the sliding portion oil-supply path 33 at a rate of 300ml/min, which eliminates the risk of poor lubrication to the piston sliding portion 14. The journal bearing 3 (40) is lubricated only at a rate of 100 ml/min, but this provides adequate lubrication at a rate of 35 ml/min to keep the conrod large-end bearing 6 (41) operable. The piston sliding portion 14 and the conrod small-end bearing 8 (42) receive lubrication with a sum of 17.5 ml/min and the amount of lubricant supply (300ml/min) from the sliding portion oil-supply path 33. In a more strict sense, the amount of lubricant (300ml/min) from the sliding portion oil-supply path 33 can be less by 17.5 ml/min.

From the above-described comparison between a conventional device and the Embodiment 1 in terms of the amount of lubricant required for the components around the crankshaft 1, the conventional device requires 1000 ml/min whereas Embodiment 1 requires 400 ml/min, indicating that a 60% reduction has been accomplished in terms of the amount of lubricant which must be supplied.

In the cam shaft bearing 11 and the balance shaft bearing 38, it is possible, as shown in Table 1 and Table 2, to reduce the amount of lubricant supply to 1/10 through 1/100 of the amount necessary for the conventional slide bearings 50 by using the needle bearings 43, 44 and by limiting the amount of lubricant to an operable level.

### [Embodiment 2]

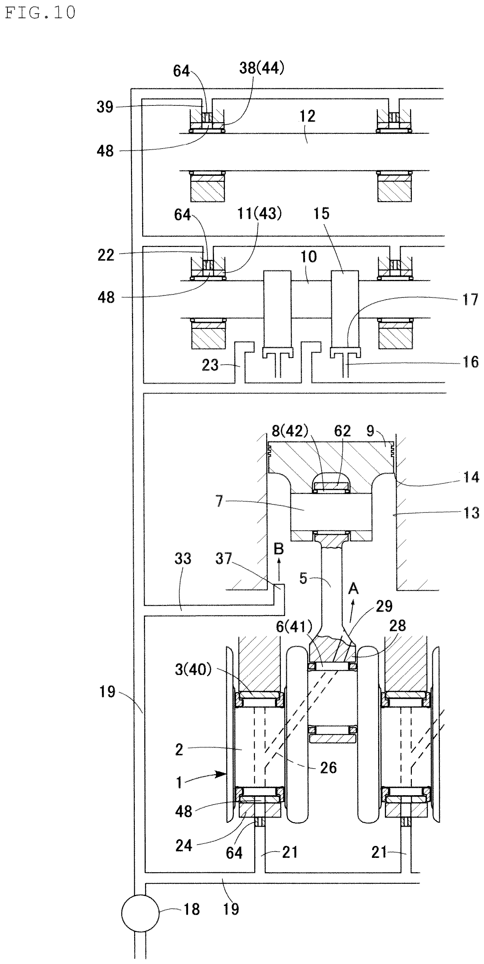

Fig. 10 shows an engine lubrication device according to Embodiment 2, which uses the configuration of the Embodiment 1 but the "oil feed-amount limiting means" is provided by throttling valves 64 each disposed for one of the journal bearing 3 (40), the cam shaft bearing 11 (43) and the balance shaft bearing 38(44) on their entrance side. The throttling valve 64 has a diameter of 0.5 through 3 millimeters. The diameter of the lubrication hole 48 in this case is essentially the same as of the oil-supply paths 21, 22, 39. Other aspects and functions are identical with Embodiment 1.

### [Embodiment 3]

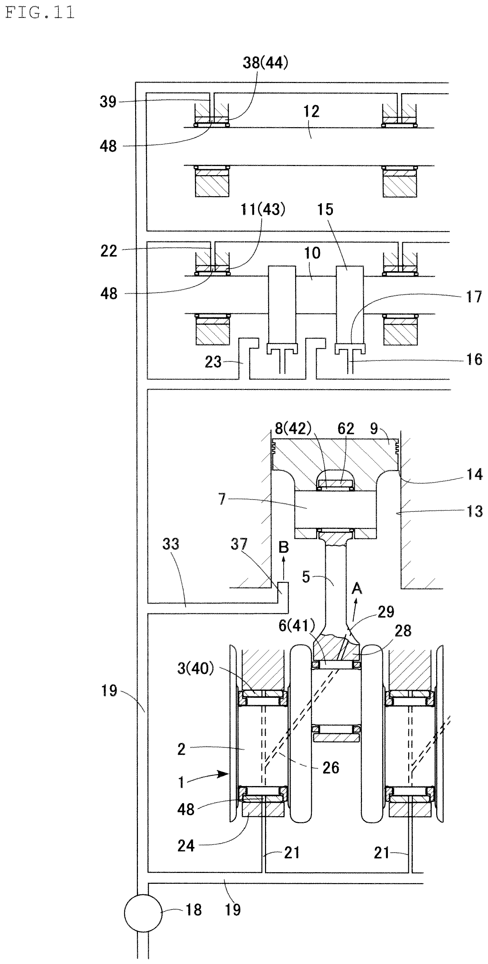

Fig. 11 shows an engine lubrication device according to Embodiment 3, where the "oil feed-amount limiting means" is provided by the bearing oil-supply path 21 of the crankshaft 1, the bearing oil-supply path 22 of the cam shaft 10 and the bearing oil-supply path 39 of the balance shaft 12, each having a reduced inner diameter of 0.5 through 3 millimeters for the purpose of limiting the amount of lubricant. The lubrication hole 48 in each of these is also made to have the same reduced diameter. Other aspects and functions are identical with Embodiments1 and 2.

### [Embodiment 4]

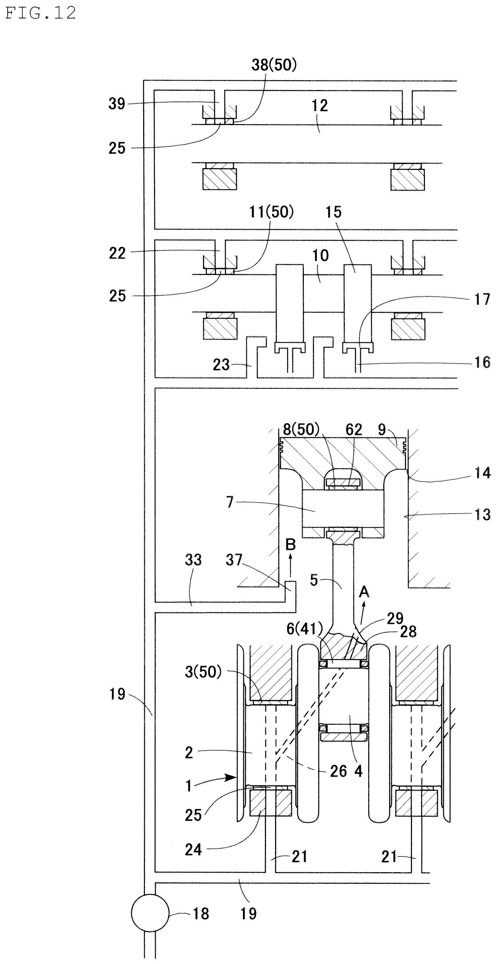

Fig. 12 shows an engine lubrication device according to Embodiment 4. While Embodiments 1 through 3 described thus far use the needle bearings (40 through 44) for all of the journal bearing 3, the conrod large-end bearing 6, the conrod small-end bearing 8, the cam shaft bearing 11 and the balance shaft bearing 38, it is not necessary that all the bearings are provided by needle bearings in order to achieve the advantage of reduced amount of lubricant through the use of needle bearing. Specifically, appreciable level of reduction can be achieved by combined use of slide bearings and needle bearings.

When slide bearings and needle bearings are used in combination, the arrangement must be followed: Specifically, for the bearings which belong to the bearing oil-supply path 21 of the crankshaft 1, i.e., the journal bearing 3 and the conrod large-end bearing 6, the bearing on the upstream side, i.e., the journal bearing 3, must be provided by a slide bearing whereas the conrod large-end bearing 6 located on the downstream side may be provided by a needle bearing. If a needle bearing is disposed on the upstream side on the contrary, the amount of lubricant is limited by the needle bearing, resulting in shortage for the operation of the slide bearing which is disposed on the downstream side.

Thus, in Embodiment 4 shown in Fig. 12, the journal bearing 3 on the upstream side is provided by a slide bearing 50 whereas the conrod large-end bearing 6 is provided by a needle bearing 41 like in the previous embodiments. The oil-feed limiting means for the conrod large-end bearing 6 (41) is implemented by a divergent path 26 which has a reduced inner diameter. The divergent path 26 may have its exit provided with a throttling valve. In this case, the arrangement contributes to overall reduction in the amount of lubrication due to the limitation to the amount of lubricant to the conrod large-end bearing 6 (41) even if all the other bearings, i.e., the conrod small-end bearing 8, the cam shaft bearing 11 and the balance shaft bearing 38 are provided by slide bearings 50.

### [Embodiment 5]

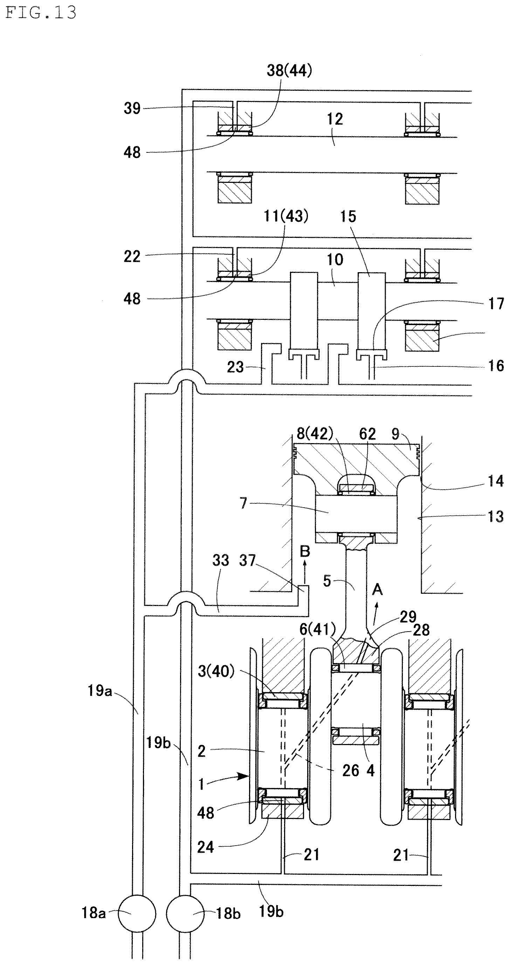

Fig. 13 shows Embodiment 5, which includes a main oil pump 18a and a sub oil pump 18b as well. The main oil pump 18a serves the main pressure oil duct 19a and the sliding portion oil-supply paths 23, 33 which are connected to the main pressure oil duct 19a whereas the sub oil pump 18b serves a sub pressure oil duct 19b and the bearing oil-supply paths 21, 22, 39 which are connected to the sub pressure oil duct 19b. The bearing oil-supply paths 21, 22, 39 have a reduced inner diameter as in Embodiment 3 (see Fig. 11), thereby limiting lubricant supply to the needle bearings 40, 41, 43, 44.

In such a configuration, the main oil pump 18a should supply only the sliding portion oil-supply paths 23, 33, with a reduced amount of lubricant, so it is possible to reduce the size of the pump as compared to a conventional oil pump 18. Also, the sub oil pump 18b should only supply the bearing oil-supply paths 21, 22, 39 with a limited amount of lubricant, so again it is possible to reduce the size of the pump as compared to a conventional oil pump 18.

In whichever of Embodiments 1 through 5, the amount of lubricant supply is reduced as compared to conventional arrangement. Therefore, it is now not necessary that the oil pumps 18, 18a, 18b are provided by those incorporated in the engine, but may be provided by smaller electric pumps which are attached externally to the engine.

### Reference Signs List

- 1: crankshaft
- 2: journal
- 3: journal bearing
- 4: crank pin
- 5: conrod
- 6: conrod large-end bearing
- 7: piston pin
- 8: conrod small-end bearing
- 9: piston
- 10: cam shaft
- 11: cam shaft bearing
- 12: balance shaft
- 13: cylinder inner wall
- 14: piston sliding portion
- 15: cam
- 16: tappet
- 17: cam sliding portion
- 18: oil pump
- 18a: the main oil pump
- 18b: the sub oil pump
- 19: main pressure oil duct
- 19a: main pressure oil duct
- 19b: sub pressure oil duct
- 21, 22: bearing oil-supply path
- 23: sliding portion oil-supply path
- 24: shaft supporting portion
- 25: lubrication hole
- 26: divergent path
- 28: conrod large-end portion
- 29: opening
- 33: sliding portion oil-supply path
- 37: lubrication nozzle
- 38: balance shaft bearing
- 39: bearing oil-supply path
- 40, 41, 42, 43, 44: needle bearing
- 45: outer ring
- 46: needle-like rollers
- 47: retainer
- 48: lubrication hole
- 49: flange portion
- 50: slide bearing
- 51: outer-ring-side narrowed pathway
- 52: small-inner-diameter surface
- 53: journal-side narrowed pathway
- 54, 55, 56, 57: seal member
- 58: crank arm boss portion
- 59: counterweight boss portion
- 60: seal member
- 61: shaft supporting portion
- 62: conrod small-end portion
- 64: the throttling valve

## Claims

1. An engine lubrication device for a four-cycle engine having two or more cylinders, comprising oil-supply paths connected to a main pressure oil duct for lubrication to a journal bearing, a conrod large-end bearing, a conrod small-end bearing and to a piston sliding portion per cylinder, wherein the oil-supply path includes a bearing oil-supply path and a sliding portion oil-supply path connected in parallel to the main pressure oil duct; the bearing oil-supply path providing a lubricant supply route to a journal shaft disposed on an upstream side and a conrod large-end bearing disposed on a downstream side; the sliding portion oil-supply path providing a lubricant supply route to the conrod small-end bearing and the piston sliding portion; at least the conrod large-end bearing being provided by a needle bearing; the bearing oil-supply path including an oil-feed limiting means for limiting an amount of lubricant supply to the needle bearing serving as the conrod large-end bearing, to an operable level.

2. The engine lubrication device according to Claim 1, wherein the journal bearing and the conrod small-end bearing are provided by needle bearings.

3. The engine lubrication device according to Claim 1 or 2, wherein the oil-feed limiting means is implemented by a needle bearing serving as the journal bearing disposed on an upstream side of the conrod large-end bearing, the needle bearing serving as the journal bearing including an outer ring formed with a lubrication hole having a smaller inner diameter than that of the bearing oil-supply path.

4. The engine lubrication device according to Claim 1 or 2, wherein the oil-feed limiting means is implemented by a needle bearing serving as the journal bearing disposed on an upstream side of the conrod large-end bearing, the needle bearing serving as the journal bearing including an outer ring formed with a lubrication hole having a throttling valve.

5. The engine lubrication device according to Claim 1 or 2, wherein the oil-feed limiting means is implemented by a needle bearing serving as the journal bearing disposed on an upstream side of the conrod large-end bearing and a bearing oil-supply path from the main pressure oil duct to the needle bearing serving as the journal bearing having an inner diameter limited to a predetermined size.

6. The engine lubrication device according to one of Claims 1 through 5, wherein the main pressure oil duct includes a bearing oil-supply path for a cam shaft bearing and a sliding portion oil-supply path for a cam sliding portion; at least one of the cam shaft bearings on the cam shaft being provided by a needle bearing; said bearing oil-supply path including oil-feed limiting means for limiting an amount of lubricant supply to the needle bearing which serves as the cam shaft bearing, to an operable range.

7. The engine lubrication device according to Claim 6, wherein the oil-feed limiting means limits the amount of lubricant supply by one of: an inner diameter size of a lubrication hole in the needle bearing which serves as the cam shaft bearing; a throttling valve provided on an entrance side of the lubrication hole; and an inner diameter size of the bearing oil-supply path.

8. The engine lubrication device according to Claim 6 or 7, wherein the sliding portion oil-supply path serving the conrod small-end bearing and the piston sliding portion and the sliding portion oil-supply path serving the cam sliding portion include a main oil pump whereas the bearing oil-supply path on the crankshaft side and the bearing oil-supply path on the cam shaft side include a sub oil pump independently from the main oil pump.

9. The engine lubrication device according to one of Claims 1 through 8, wherein the needle bearing is of a multi-piece type.

10. The engine lubrication device according to one of Claims 1 through 9, wherein the oil pump is provided by an electric oil pump attached externally to the engine.

## Patentansprüche

1. Motor-Schmiervorrichtung für einen Viertaktmotor mit zwei oder mehr Zylindern, die Ölzuführwege umfasst, die mit einer Haupt-Druckölleitung für Schmierung eines Wellenzapfenlagers, eines Lagers für das große Ende einer Pleuelstange, eines Lagers für das kleine Ende einer Pleuelstange und eines Kolben-Gleitabschnitts für jeden Zylinder verbunden sind, wobei der Ölzuführweg einen Lager-Ölzuführweg und einen Gleitabschnitt-Ölzuführweg einschließt, die parallel mit der Haupt-Druckölleitung verbunden sind, der Lager-Ölzuführweg eine Schmiermittel-Zuführstrecke zu einem Wellenzapfenlager, das an einer stromauf liegenden Seite angeordnet ist, und einem Lager für das große Ende einer Pleuelstange bildet, das an einer stromab liegenden Seite angeordnet ist, der Gleitabschnitt-Ölzuführweg eine Schmiermittel-Zuführstrecke zu dem Lager für das kleine Ende einer Pleuelstange und dem Kolben-Gleitabschnitt sowie wenigstens dem Lager für das große Ende einer Pleuelstange bildet, das durch ein Nadellager gebildet wird, wobei der Lager-Ölzuführweg eine Ölzufuhr-Begrenzungseinrichtung einschließt, mit der eine Menge der Schmiermittelzufuhr zu dem als das Lager für das große Ende einer Pleuelstange dienenden Nadellager auf einen Betriebswert beschränkt wird.

2. Motor-Schmiervorrichtung nach Anspruch 1, wobei das Wellenzapfenlager und das Lager für das kleine Ende einer Pleuelstange durch Nadellager gebildet werden.

3. Motor-Schmiervorrichtung nach Anspruch 1 oder 2, wobei die Ölzufuhr-Begrenzungseinrichtung als ein Nadellager ausgeführt ist, das als das Wellenzapfenlager dient, das an einer stromauf liegenden Seite des Lagers für das große Ende einer Pleuelstange angeordnet ist, und das Nadellager, das als das Wellenzapfenlager dient, einen Außenring enthält, der mit einem Schmierloch versehen ist, das einen kleineren Außendurchmesser hat als der Lager-Ölzuführweg.

4. Motor-Schmiervorrichtung nach Anspruch 1 oder 2, wobei die Ölzufuhr-Begrenzungseinrichtung als ein Nadellager ausgeführt ist, das als das Wellenzapfenlager dient, das an einer stromauf liegenden Seite des Lagers für das große Ende einer Pleuelstange angeordnet ist, und das Nadellager, das als das Wellenzapfenlager dient, einen Außenring enthält, der mit einem Schmierloch versehen ist, das ein Drosselventil aufweist.

5. Motor-Schmiervorrichtung nach Anspruch 1 oder 2, wobei die Ölzufuhr-Begrenzungseinrichtung als ein Nadellager ausgeführt ist, das als das Wellenzapfenlager dient, das an einer stromauf liegenden Seite des Lagers für das große Ende einer Pleuelstange angeordnet ist, und ein Lager-Ölzuführweg von der Haupt-Druckölleitung zu dem als das Wellenzapfenlager dienenden Nadellager einen Innendurchmesser hat, der auf eine vorgegebene Größe begrenzt ist.

6. Motor-Schmiervorrichtung nach einem der Ansprüche 1 bis 5, wobei die Haupt-Druckölleitung einen Lager-Ölzuführweg für ein Nockenwellen-Lager sowie einen Gleitabschnitt-Ölzuführweg für einen Nocken-Gleitabschnitt einschließt, wenigstens eines der Nockenwellen-Lager an der Nockenwelle durch ein Nadellager gebildet wird und der Lager-Ölzuführweg eine Ölzufuhr-Begrenzungseinrichtung einschließt, mit der eine Menge der Schmiermittelzufuhr zu dem Nadellager, das als das Nockenwellen-Lager dient, auf einen Betriebswert beschränkt wird.

7. Motor-Schmiervorrichtung nach Anspruch 6, wobei die Ölzufuhr-Begrenzungseinrichtung die Menge der Schmiermittelzufuhr mittels einer Innendurchmesser-Größe eines Schmierlochs in dem Nadellager, das als das Nockenwellen-Lager dient, eines an einer Eintrittsseite des Schmierlochs vorhandenen Drosselventils oder einer Innendurchmesser-Größe des Lager-Ölzuführweges beschränkt.

8. Motor-Schmiervorrichtung nach Anspruch 6 oder 7, wobei der Gleitabschnitt-Ölzuführweg, der das Lager für das kleine Ende einer Pleuelstange und den Kolben-Gleitabschnitt versorgt, und der Gleitabschnitt-Ölzuführweg, der den Nocken-Gleitabschnitt versorgt, eine Haupt-Ölpumpe einschließen, während der Lager-Ölzuführweg an der Seite der Kurbelwelle und der Lager-Ölzuführweg an der Seite der Nockenwelle eine Neben-Ölpumpe einschließen, die unabhängig von der Haupt-Ölpumpe ist.

9. Motor-Schmiervorrichtung nach einem der Ansprüche 1 bis 8, wobei das Nadellager mehrteilig ist.

10. Motor-Schmiervorrichtung nach einem der Ansprüche 1 bis 9, wobei die Ölpumpe durch eine elektrische Ölpumpe gebildet wird, die außen an dem Motor angebracht ist.

## Revendications

1. Dispositif de lubrification de moteur pour un moteur à quatre temps doté d'au moins deux cylindres, comprenant des chemins d'alimentation d'huile connectés à un canal d'huile de pression principal et destinés à la lubrification d'un coussinet de tourillon, d'un coussinet de grande extrémité de bielle, d'un coussinet de petite extrémité de bielle et d'une partie coulissante de piston par cylindre, dans lequel le chemin d'alimentation d'huile inclut un chemin d'alimentation d'huile de coussinet et un chemin d'alimentation d'huile de partie coulissante connectés en parallèle au canal d'huile de pression principal ; le chemin d'alimentation d'huile de coussinet fournissant un trajet d'alimentation de lubrifiant vers un arbre à tourillon situé sur un côté d'amont et un coussinet de grande extrémité de bielle situé sur un côté d'aval ; le chemin d'alimentation d'huile de partie coulissante fournissant un trajet d'alimentation de lubrifiant vers le coussinet de petite extrémité de bielle et la partie coulissante de piston ; au moins le coussinet de grande extrémité de bielle étant fourni par un roulement à aiguilles ; le chemin d'alimentation d'huile de coussinet comportant un moyen de limitation d'alimentation d'huile permettant de limiter à un niveau de fonctionnement une quantité de lubrifiant fournie au roulement à aiguilles constituant le coussinet de grande extrémité de bielle.

2. Dispositif de lubrification de moteur selon la revendication 1, dans lequel le coussinet de tourillon et le coussinet de petite extrémité de bielle sont fournis par des roulements à aiguilles.

3. Dispositif de lubrification de moteur selon la revendication 1 ou 2, dans lequel le moyen de limitation d'alimentation d'huile est mis en oeuvre par un roulement à aiguilles constituant le coussinet de tourillon situé sur un côté d'amont du coussinet de grande extrémité de bielle, le roulement à aiguilles qui constitue le coussinet de tourillon incluant une bague extérieure dans laquelle est formé un trou de lubrification ayant un plus petit diamètre intérieur que le chemin d'alimentation d'huile de coussinet.

4. Dispositif de lubrification de moteur selon la revendication 1 ou 2, dans lequel le moyen de limitation d'alimentation d'huile est mis en oeuvre par un roulement à aiguilles constituant le coussinet de tourillon situé sur un côté d'amont du coussinet de grande extrémité de bielle, le roulement à aiguilles qui constitue le coussinet de tourillon incluant une bague extérieure dans laquelle est formé un trou de lubrification pourvu d'un clapet d'étranglement.

5. Dispositif de lubrification de moteur selon la revendication 1 ou 2, dans lequel le moyen de limitation d'alimentation d'huile est mis en oeuvre par un roulement à aiguilles constituant le coussinet de tourillon situé sur un côté d'amont du coussinet de grande extrémité de bielle, et un chemin d'alimentation d'huile de coussinet partant du canal d'huile de pression principal vers le roulement à aiguilles qui constitue le coussinet de tourillon ayant un diamètre intérieur limité à une dimension prédéterminée.

6. Dispositif de lubrification de moteur selon l'une des revendications 1 à 5, dans lequel le canal d'huile de pression principal comprend un chemin d'alimentation d'huile de coussinet pour un coussinet d'arbre à cames et un chemin d'alimentation d'huile de partie coulissante pour une partie coulissante de came ; au moins un des coussinets d'arbre à cames sur l'arbre à cames étant fourni par un roulement à aiguilles ; ledit chemin d'alimentation d'huile de coussinet comportant un moyen de limitation d'alimentation d'huile permettant de limiter à une plage de fonctionnement une quantité de lubrifiant fournie au roulement à aiguilles qui constitue le coussinet d'arbre à cames.

7. Dispositif de lubrification de moteur selon la revendication 6, dans lequel le moyen de limitation d'alimentation d'huile limite la quantité de lubrifiant fournie grâce à : une dimension de diamètre intérieur d'un trou de lubrification dans le roulement à aiguilles qui constitue le coussinet d'arbre à cames ; ou un clapet d'étranglement situé sur un côté d'entrée du trou de lubrification ; ou une dimension de diamètre intérieur du chemin d'alimentation d'huile de coussinet.

8. Dispositif de lubrification de moteur selon la revendication 6 ou 7, dans lequel le chemin d'alimentation d'huile de partie coulissante qui alimente le coussinet de petite extrémité de bielle et la partie coulissante de piston et le chemin d'alimentation d'huile de partie coulissante qui alimente la partie coulissante de came incluent une pompe à huile principale, tandis que le chemin d'alimentation d'huile de coussinet du côté du vilebrequin et le chemin d'alimentation d'huile de coussinet du côté de l'arbre à cames incluent une pompe à huile secondaire indépendante de la pompe à huile principale.

9. Dispositif de lubrification de moteur selon l'une des revendications 1 à 8, dans lequel le roulement à aiguilles est de type à plusieurs pièces.

10. Dispositif de lubrification de moteur selon l'une des revendications 1 à 9, dans lequel la pompe à huile est fournie par une pompe à huile électrique fixée sur l'extérieur du moteur.
